# EUROPÄISCHE PATENTSCHRIFT

(11) **EP 3 955 046 B1**
(45) Veröffentlichungstag und Bekanntmachung des Hinweises auf die Patenterteilung: **05.11.2025**
(21) Anmeldenummer: 21000224.2
(22) Anmeldetag: 12.09.2018
(51) Int. Cl.: G02B 27/01

(54) **VERFAHREN ZUM BETRIEB EINER ANZEIGEEINRICHTUNG IN EINEM KRAFTFAHRZEUG**
METHOD FOR OPERATING A DISPLAY DEVICE IN A MOTOR VEHICLE
PROCÉDÉ DE FONCTIONNEMENT D'UN AGENCEMENT D'AFFICHAGE DANS UN VÉHICULE AUTOMOBILE

(30) Priorität: 09.10.2017 DE 102017217923
(43) Veröffentlichungstag der Anmeldung: 16.02.2022
(62) Teilanmeldung aus: 18778384.0
(73) Patentinhaber: AUDI AG, 85057 Ingolstadt (DE)
(72) Erfinder: Kühne, Marcus, 92339 Beilngries (DE); Profendiner, Daniel, 85051 Ingolstadt (DE); Wollny, Nils, 80538 München (DE)
(74) Vertreter: Hofstetter, Schurack & Partner

(56) Entgegenhaltungen:
- EP-A1- 2 415 625
- EP-A1- 3 352 050
- WO-A1-2017/047178
- DE-A1- 102014 009 608
- DE-A1- 102016 120 425
- US-A1- 2015 062 168
- US-B1- 9 589 372

## Beschreibung

Die Erfindung betrifft ein Verfahren zum Betrieb einer Anzeigeeinrichtung in einem Kraftfahrzeug. Daneben betrifft die Erfindung ein Kraftfahrzeug.

In Kraftfahrzeugen sollen für Fahrer und andere Insassen mittlerweile eine Vielzahl von Informationen bereitgestellt werden. Hierbei sollen die Informationen leicht erfassbar sein, den Fahrer bei einem manuellen Fahrbetrieb jedoch nicht vom Verkehrsgeschehen ablenken.

Aus der Druckschrift DE 10 2015 012 309 A1 ist es bekannt, Informationen in ein Head-up-Display beziehungsweise in eine Datenbrille einzublenden. Hierdurch wird zwar erreicht, dass eine Information unmittelbar im Blickfeld eines Nutzers zur Verfügung steht, eine Zuordnung dieser Information zu einem Objekt oder einem Ort, auf den sich diese Information bezieht, ist jedoch häufig nicht intuitiv möglich.

Um eine intuitivere Erfassung von Informationen zu ermöglichen, ist es bekannt, ergänzende Informationen unmittelbar den relevanten Bildbereichen zu überlagern. Eine entsprechende Augmented-Reality-Bildgebung ist beispielsweise auch der Druckschrift DE 11 2012 001 022 T5 bekannt. Um diese überlagerte Darstellung zu ermöglichen, wird das Umfeld über eine an der Datenbrille angeordnete Kamera erfasst.

Aus der DE 10 2014 009608 A1 ist eine Anzeigeinrichtung zum Einblenden von Graphikdaten in das Blickfeld eines Benutzers bekannt, wobei die Graphikdaten ein graphisches Objekt aus der Perspektive einer vorgegebenen Soll-Relativposition zu einem fahrzeugexternen Gegenstand darstellen.

Problematisch an der Nutzung von Augmented-Reality-Vorrichtungen in Kraftfahrzeugen ist es, dass die Umgebungssituation eines entsprechenden Headsets beziehungsweise einer entsprechenden Datenbrille im Kraftfahrzeug hoch komplex ist. Durch die Fenster des Kraftfahrzeugs ist eine unter Umständen schnell bewegte Umgebung sichtbar, während die Komponenten des Fahrzeugs selbst im wesentlich feststehen beziehungsweise sich mit den Kopfbewegungen des Nutzers langsam bewegen. Zudem können an den Scheiben des Kraftfahrzeugs Umfeldbereiche durch Verschmutzungen, Reflektionen, Aufkleber oder Ähnliches verdeckt werden, so dass die Auswertung der Umfelddaten weiter erschwert wird. Insbesondere bei widrigen Witterungsbedingungen und/oder bei Dunkelheit, jedoch auch bei klarer Sicht, ist es somit kaum möglich, mit üblichen Augmented-Reality-Brillen beziehungsweise Headsets eine robuste ortsbezogene Informationsanzeige zur Informationsanreicherung des Fahrzeugumfelds zu ermöglichen.

Der Erfindung liegt somit die Aufgabe zugrunde, eine Darstellung von die Umgebung des Kraftfahrzeugs betreffenden Informationen zu verbessern. Die Aufgabe wird erfindungsgemäß durch ein Verfahren der eingangs genannten Art gelöst, das die folgenden Schritte umfasst:
- Erfassen von Umgebungsdaten, die zumindest einen in einem Sichtfeld eines Benutzers liegenden Umgebungsbereich der Umgebung des Kraftfahrzeugs betreffen, durch eine Sensorik des Kraftfahrzeugs,
- Bereitstellen wenigstens einer an den Benutzer auszugebenden Information durch eine Informationsquelle,
- Sichtbarmachen einer zumindest teilweise überlagerten Darstellung einer die Information wiedergebenden Informationsdarstellung und des Umgebungsbereichs für den Benutzer durch die Anzeigeeinrichtung, wobei die Art der Informationsdarstellung und/oder die Position, an, und/oder die Orientierung, in der die Informationsdarstellung sichtbar gemacht wird, von den Umgebungsdaten abhängt.

Erfindungsgemäß wird somit vorgeschlagen, die Art der Informationsdarstellung beziehungsweise die Position und/oder Orientierung der Informationsdarstellung in Abhängigkeit von Umgebungsdaten zu bestimmen, die durch eine Sensorik des Kraftfahrzeugs erfasst werden. Wird nun beispielsweise eine Datenbrille oder ein Headset zur Augmented-Reality-Darstellung genutzt, so erfolgt die Registrierung der Informationsdarstellung mit der Umgebung nun nicht mehr oder nicht mehr ausschließlich anhand der über die anzeigeeinrichtungsseitige Sensorik erfassten Bilddaten, sondern es werden stattdessen oder ergänzend Sensordaten des Kraftfahrzeugs genutzt.

Hieraus ergeben sich mehrere Vorteile. Zum einen ist in modernen Kraftfahrzeugen häufig eine komplexe Sensorik vorhanden, die weit über eine Sensorik, wie sie beispielsweise an Augmented-Reality-Brillen vorgesehen ist, hinausgeht. Beispielsweise können Kraftfahrzeuge eine oder mehrere Kameras umfassen, die das Umfeld des Kraftfahrzeugs im Bereich des sichtbaren Lichts und/oder im Infrarotbereich erfassen. Eine kraftfahrzeugseitige Sensorik kann jedoch auch unmittelbar Abstände oder Relativgeschwindigkeiten zu Objekten erfassen. Dies ist beispielsweise durch 3D-Kameras, beispielsweise Time-of-Flight-Kameras, durch Radarsensoren oder durch Laserscanner möglich. Somit stehen potentiell mehrere Quellen für Umgebungsdaten zur Verfügung, durch die ein besseres Umfeldmodell bestimmt werden kann, als es beispielsweise durch eine einzelne Kamera einer Augmented-Reality-Brille möglich wäre.

Die vorhandene Sensorik ist zudem bereits für die Erfassung eines Kraftfahrzeugumfelds optimiert, da sie ohnehin dieser Aufgabe dient. Zudem ist die kraftfahrzeugseitige Verarbeitung von Umgebungsdaten häufig auch daraufhin optimiert, trotz relativ hoher Relativgeschwindigkeiten eine robuste Objekterkennung zu ermöglichen. Aus den genannten Gründen stellt eine kraftfahrzeugseitige Sensorik somit ein wesentlich besseres Abbild der Fahrzeugumgebung bereit, als dies beispielsweise durch eine Sensorik einer Augmented-Reality-Brille möglich wäre.

Zugleich ist das erfindungsgemäße Verfahren jedoch mit relativ geringem technischem Aufwand umsetzbar. Eine hochwertige kraftfahrzeugseitige Sensorik ist häufig ohnehin in Kraftfahrzeugen vorhanden, um einen Fahrer beim Fahrbetrieb zu unterstützen beziehungsweise einen teilautomatisierten beziehungsweise automatisierten Betrieb des Kraftfahrzeugs zu ermöglichen. Zudem weisen durch Benutzer tragbare Anzeigeeinrichtungen, also beispielsweise Datenbrillen, häufig bereits Schnittstellen für eine Drahtloskommunikation auf, die unmittelbar oder mit geringfügigen Anpassungen auch mit kraftfahrzeugseitigen Kommunikationseinrichtungen kommunizieren können. Beispielsweise kann eine Kommunikation über Bluetooth^{®} oder WLAN erfolgen. Als Kommunikationsprotokoll kann ein Internetprotokoll genutzt werden, das auf der Internet- beziehungsweise Vermittlungsschicht arbeiten kann. Beispielsweise kann eine kraftfahrzeugseitige Kommunikationseinrichtung mit einer separat ausgebildeten Anzeigeeinrichtung über das "Adaptive Internet Protocol" (AIP) kommunizieren. Hierbei kann eine Anwendung zur Informationsvisualisierung auf einem kraftfahrzeugseitigen oder kraftfahrzeugexternen Server laufen, der der Anzeigeeinrichtung als Display mit darzustellenden Informationen versorgt. Die Datenrate kann hierbei dynamisch an die Verbindungsqualität angepasst werden. Das AIP unterstützt auch Eingaben von Displayseite, beispielsweise um eine relative Bewegung beziehungsweise Lage einer am Kopf des Benutzers getragene Anzeigeeinrichtung zu dem Kraftfahrzeug an den Server zu kommunizieren.

Die Informationsdarstellung kann in Form von Buchstaben, Symbolen und/oder Zahlen erfolgen. Sie kann eine zweidimensionale Grafik sein oder eine zweidimensionale Grafik umfassen. Es ist hierbei möglich, dass die zweidimensionale Grafik direkt in einer entsprechenden Position als eine Texttafel dargestellt wird. Hierbei kann die Grafik beziehungsweise die alphanumerische Darstellung transparent sein, es kann jedoch ein entsprechender Hintergrund dargestellt werden, um die Lesbarkeit beziehungsweise Sichtbarkeit zu verbessern.

Erfindungsgemäß wird die Information zunächst dreidimensional dargestellt und eine zweidimensionale Informationsdarstellung erst durch eine zweidimensionale Abbildung durch eine virtuelle Kamera berechnet. Hierbei kann die Information als dreidimensionale Form, beispielsweise als Pfeil zur Gabe von Navigationsanweisungen, dargestellt werden. Erfindungsgemäß wird eine Information flächig dargestellt, wobei die Fläche, auf der die Information dargestellt wird, zunächst in einem virtuellen dreidimensionalen Raum positioniert und orientiert und/oder gekrümmt und anschließend abgebildet wird.

Unter einer Art der Informationsdarstellung ist die Weise zu verstehen, wie die Information abgebildet wird. Beispielsweise können wenigstens eine Farbe einer Darstellung und/oder eines Hintergrunds und/oder die Form eines dreidimensionalen Objekts, das die Information darstellt, zumindest aber eine Form einer Fläche, auf der die Information dargestellt wird, von den Umgebungsdaten abhängen.

Im erfindungsgemäßen Verfahren können potentiell verschiedene Informationen dargestellt werden. Beispielsweise können Navigationsinformationen dargestellt werden. Dies kann in Form von Pfeilen erfolgen, die mit der Umgebung überlagert dargestellt werden. Alternativ oder ergänzend können zu bestimmten Positionen oder bestimmten Objekten, virtuelle Informationstafeln dargestellt werden, die, wie erläutert, unmittelbar zweidimensional dargestellt werden können oder zunächst als dreidimensionale Flächen in einem Koordinatensystem platziert und anschließend projiziert werden können. Beispielsweise können als Informationen Straßennamen, Hausnummern oder Abstände oder Relativgeschwindigkeiten anderer Verkehrsteilnehmer dargestellt werden. Es ist jedoch auch möglich, insbesondere im Rahmen eines zumindest teilautomatisierten Fahrbetriebs oder für Fahrzeuginsassen, die nicht der Fahrer sind, Hintergrundinformationen bereitzustellen, die den Fahrbetrieb nicht unmittelbar betreffen. Beispielsweise können Informationen über Restaurants und Geschäfte und/oder Sehenswürdigkeiten sichtbar gemacht werden.

Im erfindungsgemäßen Verfahren kann eine Anzeigeeinrichtung verwendet werden, die separat von dem Kraftfahrzeug ausgebildet und zur Befestigung an dem Kopf und in dem Sichtfeld des Benutzers ausgebildet ist. Hierbei kann es sich insbesondere um eine Augmented-Reality- beziehungsweise Virtual-Reality-Brille beziehungsweise ein entsprechendes Headset handeln. Alternativ kann als Anzeigeeinrichtung auch eine Anzeigeeinrichtung des Kraftfahrzeugs selbst, beispielsweise ein Display, genutzt werden. Es ist auch möglich, dass als Anzeigeeinrichtung eine separat von dem Kraftfahrzeug ausgebildete Anzeigeeinrichtung genutzt wird, die beispielsweise an einer Halterung am Kraftfahrzeug gehaltert wird oder händisch von einem Benutzer gehalten wird. Beispielsweise kann ein Smartphone als Anzeigeeinrichtung genutzt werden.

Wird eine separate von dem Kraftfahrzeug ausgebildete Anzeigeeinrichtung genutzt, so ist es, insbesondere wenn Informationen im Blickfeld des Benutzers eingeblendet werden sollen, vorteilhaft, wenn eine relative Lage diese Anzeigeeinrichtung zum Kraftfahrzeug und somit zu der zur Erfassung der Umgebungsdaten genutzten Sensorik des Kraftfahrzeugs bekannt ist. Es ist daher möglich, dass die Anzeigeeinrichtung eine Positionserfassungseinrichtung aufweist, durch die eine relative Position und/oder Orientierung der Anzeigeeinrichtung zu einer kraftfahrzeugfesten Bezugsposition und/oder Bezugsrichtung oder eine Bezugsinformation, aus der die relative Position und/oder Orientierung ermittelt werden, erfasst werden. Beispielsweise kann die Anzeigeeinrichtung eine Kamera oder eine andere Sensorik zur Umfelderfassung aufweisen. Wird als Anzeigeeinrichtung ein Smartphone oder eine Augmented-Reality- beziehungsweise Virtual-Reality-Brille beziehungsweise ein entsprechendes Headset genutzt, ist eine solche Sensorik häufig ohnehin vorhanden. Durch eine Auswertung der Sensordaten dieser weiteren Sensorik, beispielsweise der Bilddaten der Kamera, kann die relative Position und/oder Orientierung der Anzeigeeinrichtung zu der kraftfahrzeugfesten Bezugspositionen und/oder Bezugsrichtung ermittelt werden. Beispielsweise können bestimmte Markierungen und/oder markante, ortsfeste Elemente des Kraftfahrzeuginnenraums oder der Kraftfahrzeugkarosserie durch die weitere Sensorik erfasst werden und durch Auswertung der Sensordaten erkannte werden. Die Ermittlung einer Position beziehungsweise Orientierung einer Sensorik bezüglich markanter, durch die Sensorik erfasster Markierungen ist im Stand der Technik prinzipiell bekannt und soll nicht im Detail erläutert werden. Die Auswertung der weiteren Sensordaten zur Bestimmung der relativen Position beziehungsweise Orientierung kann durch eine Verarbeitungseinrichtung der Anzeigeeinrichtung, eine kraftfahrzeugseitige Verarbeitungseinrichtung und/oder eine fahrzeugexterne Verarbeitungseinrichtung erfolgen.

Als Anzeigeeinrichtung kann eine videobasierte Anzeigeeinrichtung verwendet werden, wobei zur Sichtbarmachung des Umgebungsbereichs ein Bild des Umgebungsbereichs durch die Sensorik oder eine weitere Sensorik erfasst und dargestellt wird. Alternativ kann eine teildurchsichtige Anzeigeeinrichtung verwendet werden, durch die der Umgebungsbereich für den Benutzer durch die Ausgabeeinrichtung hindurch zumindest teilweise sichtbar ist. Es ist auch möglich, dass als Anzeigeeinrichtung eine virtuelle Netzhautanzeige verwendet wird, durch die die Informationsdarstellung auf die Netzhaut projiziert wird. Eine virtuelle Netzhautanzeige wird auch als "Virtual Retinal-Display" bezeichnet. Die genannten Anzeigeeinrichtungen sind aus anderen Anwendungsbereichen prinzipiell bekannt und sollen daher nicht im Detail erläutert werden.

Durch Auswertung der Umgebungsdaten kann wenigstens ein Objekt oder wenigstens eine Position erkannt werden, wobei die auszugebende Information in Abhängigkeit einer Eigenschaft des erkannten Objekts oder in Abhängigkeit der Position bereitgestellt wird. Die darzustellenden Informationen können somit insbesondere festen Positionen in der Umgebung beziehungsweise Positionen, an denen sich ein bestimmtes Objekt befindet, zugeordnet sein. Vorzugsweise wird die Informationsdarstellung derart visualisiert, dass sie durch den Benutzer klar der Position beziehungsweise dem Objekt zugeordnet werden kann.

Für Objekte kann beispielsweise eine Objektklasse beziehungsweise eine Objektidentifikation bestimmt werden und es können Zusatzinformationen aus einer Datenbank als Informationsquelle ausgelesen werden. Alternativ kann als Informationsquelle für Objekte auch die oder eine weitere fahrzeugseitige Sensorik, eine Fahrzeug-zu-Fahrzeug- beziehungsweise Fahrzeug-zu-Infrastruktur-Kommunikation oder Ähnliches dienen. Es kann beispielsweise vorteilhaft sein, wenn Informationen zu anderen Verkehrsteilnehmern oder zu Infrastruktureinrichtungen, beispielsweise zu Ampeln, eingeblendet werden sollen.

Es ist möglich, dass in Abhängigkeit eines Fahrmodus des Kraftfahrzeugs, in Abhängigkeit davon, ob es sich bei dem Benutzer um den Fahrer handelt und/oder in Abhängigkeit von einer benutzerseitig vorgegebene Konfiguration ausgewählt wird, welche Informationen dargestellt werden beziehungsweise zu welchen Objekten oder Positionen Informationen dargestellt werden. Beispielsweise können während eines manuellen Fahrbetriebs für einen Fahrer ausschließlich fahrrelevante Informationen dargestellt werden. Für andere Insassen beziehungsweise während eines vollautomatisierten Fahrbetriebs können beispielsweise interessante Informationen zu bestimmten Orten oder Gebäuden, Kontaktdaten von Bekannten, deren Fahrzeug im Umfeld erkannt wurden, oder Ähnliches dargestellt werden.

Durch die Auswertung der Umgebungsdaten kann das oder ein Objekt erkannt werden, wobei in Abhängigkeit einer Position und/oder einer Orientierung des Objekts die Art der Informationsdarstellung und/oder die Position, an, und/oder die Orientierung, in der die Informationsdarstellung sichtbar gemacht wird, bestimmt werden. Beispielsweise kann die Informationsdarstellung derart erfolgen, dass die Informationsdarstellung für den Benutzer über dem Objekt zu schweben scheint oder dass es scheint, als wäre sie auf das Objekt projiziert beziehungsweise als eine Art Aufkleber auf das Objekt aufgeklebt. Hierdurch ist die Information und die Zuordnung zu dem Objekt besonders intuitiv erfassbar.

Aus den Umgebungsdaten kann ein den Umgebungsbereich beschreibendes, dreidimensionales Umgebungsmodel ermittelt werden, wobei in Abhängigkeit der Information und des Umgebungsmodels ein dreidimensionales oder flächiges Informationsobjekt generiert und in einem bezüglich des Umgebungsmodells vorgegebenen Koordinatensystem positioniert und/oder orientiert wird, wonach die Informationsdarstellung durch Projektion des Informationsobjekts generiert wird. Zur Projektion kann eine virtuelle Kamera genutzt werden, die in dem Umgebungsmodell derart angeordnet ist, dass ihr Erfassungsbereich dem Blickwinkel des Benutzers entspricht beziehungsweise dass sie das Umgebungsmodell aus der Perspektive des Benutzers betrachtet. Das Umgebungsmodell selbst wird vorzugsweise nicht abgebildet. Die Abbildung gibt vorzugsweise nur das Informationsobjekt wieder, das aus der entsprechenden Perspektive betrachtet wird. Durch die beschriebene Projektion kann auch die Position der Informationsdarstellung vorgegeben werden.

Bei einer teiltransparenten Anzeigeeinrichtung, durch die der Umgebungsbereich sichtbar ist, beziehungsweise einer Projektion der Informationsdarstellung in das Auge des Benutzers, ist es ausreichend, die wie vorangehend diskutiert bestimmte Informationsdarstellung in dem Blickfeld des Benutzers abzubilden beziehungsweise die Daten zu projizieren. Wird hingegen eine videobasierte Anzeigeeinrichtung genutzt, so sollte zudem ein Abbild des Umgebungsbereichs dargestellt werden. Ein derartiges Abbild kann durch eine Sensorik, beispielsweise eine Kamera der Anzeigeeinrichtung oder durch die oder eine weitere Sensorik des Kraftfahrzeugs erfasst werden.

Wie bereits erläutert, werden Information selbst zweidimensional dargestellt, diese zweidimensionale Darstellung jedoch an eine dreidimensionale Fläche der Umgebung angepasst.

In dem Umgebungsmodell kann eine Fläche des oder eines Objekts ausgewählt werden, wobei das flächige Informationsobjekt auf dieser Fläche angeordnet wird. Dies kann beispielsweise erfolgen, indem das flächige Informationsobjekt als Pixel- oder Vektor-Grafik bereitgestellt wird und als Textur auf die entsprechende Fläche aufgebracht wird. Die Fläche kann eben oder gekrümmt sein. Die Fläche kann insbesondere eine Fläche des Objekts sein, zu dem entsprechende Informationen bereitgestellt werden sollen. Durch das beschriebene Vorgehen können Informationen virtuell auf Objekte, beispielsweise Hauswände oder Kraftfahrzeuge, projiziert beziehungsweise aufgeklebt werden.

Die Umgebungsdaten oder das Umgebungsmodell können an eine kraftfahrzeugexterne Einrichtung bereitgestellt werden, die die Art der Informationsdarstellung und/oder die Position, an, und/oder die Orientierung, in der die Informationsdarstellung sichtbar gemacht wird, vorgibt. Die Kommunikation zu der kraftfahrzeugexternen Einrichtung erfolgt vorzugsweise drahtlos. Die Einrichtung kann zusätzlich die ausgebenden Informationen bereitstellen, das heißt als Informationsquelle dienen. Beispielsweise kann die kraftfahrzeugexterne Einrichtung in den Umgebungsdaten Positionen und/oder Objekte identifizieren, für die Informationen bereitgestellt werden sollen, entsprechende Informationen wählen, für diese eine Art der Informationsdarstellung, eine Position und/oder eine Orientierung vorgeben und die entsprechende Informationsdarstellungen mit Positions- beziehungsweise Orientierungsinformationen oder ein Gesamtbild, das die Umgebung des Kraftfahrzeugs mit den dazu überlagerten Informationsdarstellungen darstellt, an das Kraftfahrzeug bereitstellen. Es sind jedoch auch zahlreiche andere Alternativen möglich. Beispielsweise kann als Informationsquelle eine andere kraftfahrzeugexterne Einrichtung oder eine kraftfahrzeuginterne Einrichtung, beispielsweise eine Kartendatenbank im Kraftfahrzeug, eine kraftfahrzeuginterne Sensorik oder Ähnliches genutzt werden. In diesem Fall ist es möglich, dass die Information zusätzlich mit den Umgebungsdaten an die kraftfahrzeugexterne Einrichtung übertagen wird, um dort weiterverarbeitet zu werden. Alternativ kann die kraftfahrzeugexterne Einrichtung Parameter an das Kraftfahrzeug bereitstellen, durch die die Form und/oder Position und/oder Orientierung der Informationsdarstellung vorgegeben wird.

Die Nutzung einer kraftfahrzeugexternen Einrichtung kann vorteilhaft sein, um den erforderlichen Verarbeitungsaufwand im Kraftfahrzeug und in der Anzeigeeinrichtung zu reduzieren. Da mittlerweile auch bei einer drahtlosen Kommunikation kurze Antwortzeiten erreicht werden können, kann der technische Aufwand zur Umsetzung des Verfahrens somit weiter reduziert werden.

Neben dem erfindungsgemäßen Verfahren betrifft die Erfindung ein Kraftfahrzeug, das eine Sensorik zur Erfassung eines Umgebungsbereichs umfasst und das zur Durchführung des erfindungsgemäßen Verfahrens eingerichtet ist. Das Kraftfahrzeug umfasst vorzugsweise eine Kommunikationseinrichtung zur Kommunikation mit einer separat vom Kraftfahrzeug ausgebildeten Anzeigeeinrichtung und/oder mit einer kraftfahrzeugexternen Einrichtung, die die Information bereitstellt und/oder die Art, die Position und/oder die Orientierung der Informationsdarstellung vorgibt. Das Kraftfahrzeug kann eine Verarbeitungseinrichtung umfassen, die die Art, Position und/oder Orientierung der Informationsdarstellung in Abhängigkeit der Umgebungsdaten ermitteln kann und/oder die Informationsdarstellung aus der Information ermitteln kann.

Weitere Vorteile und Einzelheiten der Erfindung ergeben sich aus den im Folgenden beschriebenen Ausführungsbeispielen sowie den zugehörigen Zeichnungen. Hierbei zeigen schematisch:
- Fig. 1: eine Verkehrssituation, in der ein Ausführungsbeispiel des erfindungsgemäßen Verfahrens durch ein Ausführungsbeispiel des erfindungsgemäßen Kraftfahrzeugs durchgeführt wird,
- Fig. 2: eine überlagerte Darstellung einer Informationsdarstellung und des Umgebungsbereichs in der in Fig. 1 gezeigten Verkehrssituation, und
- Fig. 3: die in Fig. 1 genutzte Anzeigeeinrichtung.

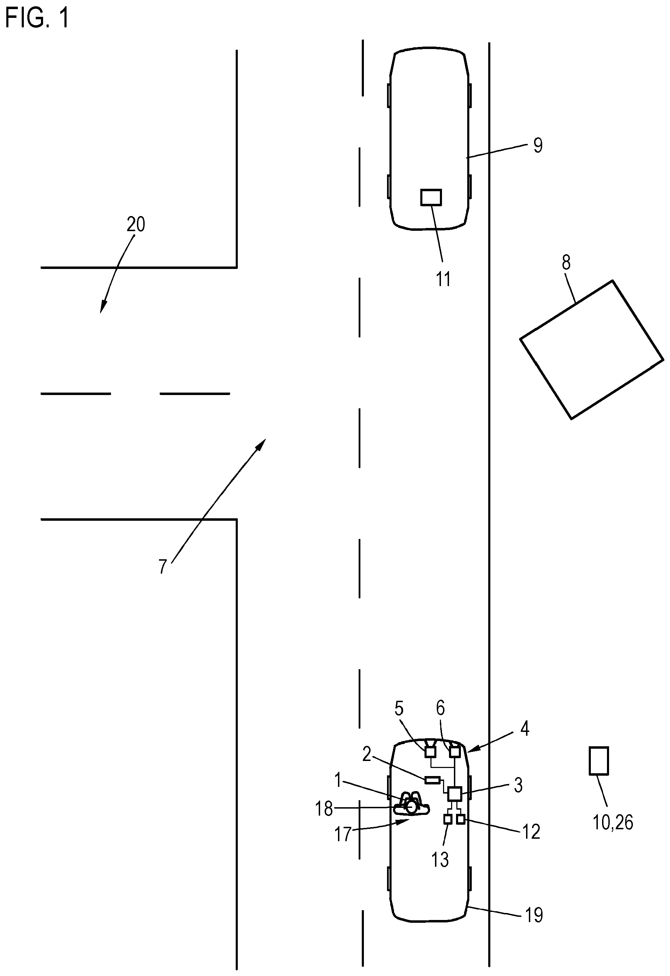

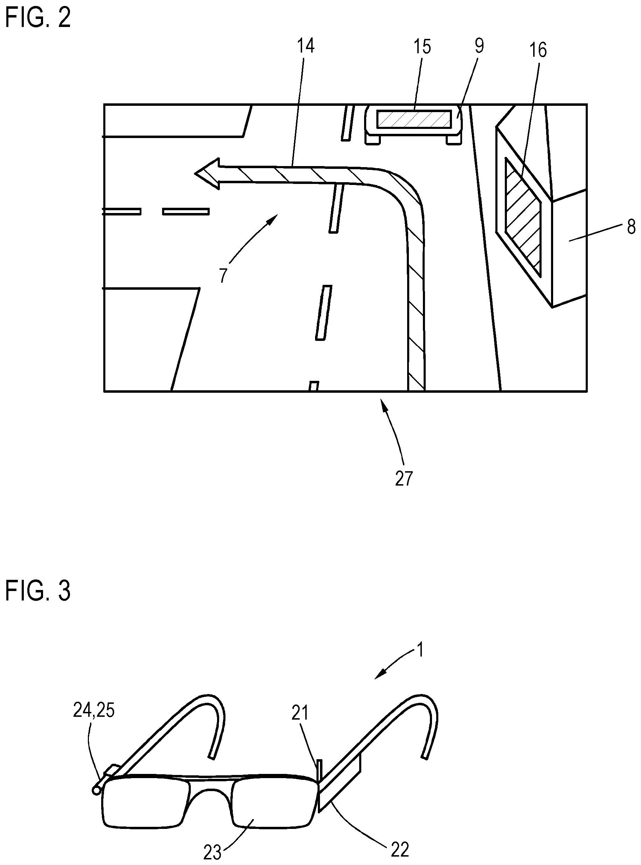

Fig. 1 zeigt eine Verkehrssituation, in der ein Verfahren zum Betrieb einer Anzeigeeinrichtung 1, 2 in einem Kraftfahrzeug 19 genutzt wird. Die Anzeigeeinrichtung 1 ist eine separat von dem Kraftfahrzeug 19 ausgebildete Anzeigeeinrichtung, die an dem Kopf 18 des Benutzers 17 in dessen Sichtfeld befestigt ist. Bei der Anzeigeeinrichtung 1 handelt es sich um eine Augmented-Reality-Brille, die später noch mit Bezug auf Fig. 3 genauer erläutert werden wird. Eine solche Anzeigeeinrichtung ermöglicht eine besonders intuitive Informationsdarstellung. Alternativ oder ergänzend kann das im Folgenden beschriebene Verfahren jedoch auch genutzt werden, um Informationen auf der Anzeigeeinrichtung 2, einem fest im Kraftfahrzeug 19 angeordneten Display, anzuzeigen.

Während des Fahrbetriebs des Kraftfahrzeugs 19 werden Umgebungsdaten erfasst, die den im Sichtfeld des Benutzers 17 liegenden Umgebungsbereich betreffen. Die Umgebungsdaten werden durch eine Sensorik 4 des Kraftfahrzeugs erfasst. Beispielhaft sind eine Kamera 5 und ein Radarsensor 6 im Frontbereich des Kraftfahrzeugs 19 gezeigt. Es wäre auch möglich, ausschließlich die Kamera 5, ausschließlich den Radarsensor 6, mehrere Kameras 5, mehrere Radarsensoren 6 und/oder weitere Sensoren, beispielsweise einen Laserscanner, zur Erfassung der Umgebungsdaten zu nutzen.

Die Umgebungsdaten werden durch eine Verarbeitungseinrichtung 3 des Kraftfahrzeugs verarbeitet, um relevante Positionen 7 und Objekte 8, 9 im Umfeld des Kraftfahrzeugs 19 zu erkennen, zu denen Informationen für den Benutzer 17 bereitgestellt werden sollen. Die Position 7 ist die Position einer Einmündung, an der das Kraftfahrzeug 19 gemäß einer geplanten Route abbiegen soll. Eine diesbezügliche Information wird durch die Informationsquelle 13, ein Navigationssystem des Kraftfahrzeugs 19, bereitgestellt. Das Objekt 8 ist ein Gebäude. Zu dem Objekt 8 kann beispielsweise eine Adresse als Information bereitgestellt werden. Alternativ oder ergänzend können Angebots- oder Werbeinformationen bereitgestellt werden, wenn es sich um ein Geschäft handelt, oder beispielsweise historische Informationen, wenn es sich um eine Sehenswürdigkeit handelt. Entsprechende Informationen können durch eine separat von dem Kraftfahrzeug 19 ausgebildete Informationsquelle 10, beispielsweise ein Backend-Server, bereitgestellt werden.

Das Objekt 9 ist ein weiteres Kraftfahrzeug. Informationen bezüglich dieses Kraftfahrzeugs, also beispielsweise eine Fahrgeschwindigkeit oder Kontaktdaten, falls es sich um das Fahrzeug eines Bekannten handelt, können durch die Informationsquelle 11 über eine Fahrzeug-zu-Fahrzeug-Kommunikation bereitgestellt werden. Zur Kommunikation mit den fahrzeugexternen Informationsquellen 10, 11 umfasst das Kraftfahrzeug eine Kommunikationseinrichtung 12.

Die verschiedenen Informationen sollen für den Benutzer 17 so dargestellt werden, dass die zugehörigen Informationsdarstellungen durch den Benutzer 17 intuitiv der Position 7 und den Objekten 8, 9 zugeordnet werden können. Ein Beispiel für eine solche Darstellung 27 ist in Fig. 2 dargestellt. Als Informationsdarstellung 14, die ein Abbiegen an der Position 7 darstellt, soll ein dreidimensionaler Pfeil dargestellt werden, der im Blickfeld des Benutzers 17 etwas oberhalb der Straße schweben soll. Die Informationsdarstellungen 15, 16 sollen hingegen so erscheinen, als wären sie auf die Objekte 8, 9 aufgeklebt beziehungsweise auf diese projiziert.

Um diese Art der Darstellung zu ermöglichen, werden durch die Verarbeitungseinrichtung 3 die Umgebungsdaten zunächst verarbeitet, um ein dreidimensionales Umgebungsmodell des Umgebungsbereichs zu berechnen. Innerhalb dieses Umgebungsmodells sind die Position 7 sowie die Positionen und Orientierungen des eigenen Kraftfahrzeugs 19 und der Objekte 8, 9 bekannt. Dementsprechend kann die Informationsdarstellung 14 als dreidimensionaler Pfeil auf eine Art geformt, positioniert und orientiert werden, dass sie sich in diesem Umgebungsmodell ausgehend vom eigenen Kraftfahrzeug 19 bis zur Spur 20, in die an der Position 7 eingebogen werden soll, erstreckt.

Die Informationsdarstellungen 15, 16 werden zunächst als zweidimensionale Texturen generiert. Schließlich werden aus dem Umgebungsmodell Flächen extrahiert, die den jeweiligen Objekten 8, 9 zugeordnet sind und die jeweilige Informationsdarstellung 15, 16 wird als Textur auf dies Flächen aufgelegt.

Wie im Folgenden noch genauer erläutert werden wird, wird eine Blickrichtung des Benutzers 17 und somit eine Position und Ausrichtung der Anzeigeeinrichtung 1 ermittelt. Diese Position und Ausrichtung wird als Position und Ausrichtung einer virtuellen Kamera im dreidimensionalen Umgebungsmodell genutzt, um durch Projektion der entsprechenden Flächen beziehungsweise des dreidimensionalen Objekts die Informationsdarstellungen 14, 15, 16 zu generieren.

In einem alternativen Ausführungsbeispiel könnten die Umgebungsdaten auch durch eine fahrzeugexterne Einrichtung 26 verarbeitet werden, um die Art der Informationsdarstellungen 14, 15, 16 sowie die Position und/oder Ausrichtung ihrer Darstellung zu bestimmen. Hierdurch kann der Verarbeitungsaufwand im Kraftfahrzeug gesenkt werden.

Fig. 3 zeigt eine Detailansicht der Anzeigeeinrichtung 1. Das anzuzeigende Bild kann durch die Verarbeitungseinrichtung 3 des Kraftfahrzeugs 19 ermittelt und über die kraftfahrzeugseitige Kommunikationseinrichtung 12 und die anzeigeeinrichtungsseitige Kommunikationseinrichtung 21 an eine Steuerelektronik 22 der Anzeigeeinrichtung übertragen werden. Hierbei kann ein Bild übertragen werden, das die Informationsdarstellungen 14, 15, 16 umfasst und für die weiteren Bildbereiche angibt, dass die Anzeigeeinrichtung 1 in diesen Bereichen transparent sein soll. Entsprechend wird ein teiltransparentes Anzeigeelement 23 derart angesteuert, dass es die Informationsdarstellungen 14, 15, 16 in entsprechenden Bereichen anzeigt und ansonsten transparent bleibt, womit für den Benutzer 17 eine Überlagerung der Informationsdarstellungen 14, 15, 16 mit dem unmittelbar durch die transparente Anzeigeeinrichtung betrachteten Umgebungsbereich sichtbar gemacht wird.

Alternativ wäre es möglich, dass die Informationsdarstellungen 14, 15, 16 durch die Anzeigeeinrichtung 1 unmittelbar auf die Netzhaut des Benutzers 17 projiziert werden. Es wäre auch möglich, eine videobasierte Anzeigeeinrichtung zu nutzen. Bildbereiche, in denen keine Informationsdarstellungen 14, 15, 16 angezeigt werden, können einem Hintergrundbild entnommen werden, das durch die weitere Sensorik 24 der Anzeigeeinrichtung 1 erfasst wird. Alternativ wäre es auch möglich, das Hintergrundbild durch die fahrzeugseitige Sensorik 4 zu erfassen und ebenfalls an die Anzeigeeinrichtung 1 zu übertragen.

Um das vorangehend erläuterte Vorgehen zu ermöglichen, muss die relative Position und Orientierung der Anzeigeeinrichtung 1 zu dem Kraftfahrzeug 19 und somit der Sensorik 4 bekannt sein. Um diese Position und/oder Orientierung zu ermitteln, können durch die weitere Sensorik 24 markante Elemente und/oder Markierungen im Fahrzeuginnenraum erfasst werden. Entsprechende Bilddaten können als Bezugsinformation dienen, aus der die relative Position und/oder Orientierung der Anzeigeeinrichtung 1 zum Kraftfahrzeug 19 ermittelbar ist. Die weitere Sensorik 24 dient somit als Positionserfassungseinrichtung 25 für die Anzeigeeinrichtung 1. Die Bestimmung von Position und Orientierung kann beispielsweise durch die Verarbeitungseinrichtung 3 erfolgen.

## Patentansprüche

1. Verfahren zum Betrieb einer Anzeigeeinrichtung (1, 2) in einem Kraftfahrzeug (19), umfassend die Schritte:
- Erfassen von Umgebungsdaten, die zumindest einen in einem Sichtfeld eines Benutzers (17) liegenden Umgebungsbereich der Umgebung des Kraftfahrzeugs (19) betreffen, durch eine Sensorik (4) des Kraftfahrzeugs (19),
- Bereitstellen wenigstens einer an den Benutzer (17) auszugebenden Information durch eine Informationsquelle (10, 11, 13),
- Sichtbarmachen einer zumindest teilweise überlagerten Darstellung (27) einer die Information wiedergebenden Informationsdarstellung (14, 15, 16) und des Umgebungsbereichs für den Benutzer (17) durch die Anzeigeeinrichtung (1, 2), wobei die Art der Informationsdarstellung von den Umgebungsdaten abhängt, wobei die Information zunächst dreidimensional dargestellt wird und eine zweidimensionale Informationsdarstellung (14, 15, 16) erst durch eine zweidimensionale Abbildung durch eine virtuelle Kamera berechnet wird, **dadurch gekennzeichnet, dass**
als Art der Informationsdarstellung eine Form, nämlich eine Krümmung, einer Fläche, auf der die Information dargestellt wird, von den Umgebungsdaten abhängt, wobei die zweidimensionale Informationsdarstellung an die Form der Fläche angepasst wird.

2. Verfahren nach Anspruch 1,
**dadurch gekennzeichnet,**
**dass** zusätzlich als Art der Informationsdarstellung die Form eines dreidimensionalen Objekts, das die Information darstellt, von den Umgebungsdaten abhängt.

3. Verfahren nach Anspruch 1 oder 2,
**dadurch gekennzeichnet,**
**dass** zusätzlich die Position, an, und/oder die Orientierung, in der die Informationsdarstellung (14, 15, 16) sichtbar gemacht wird, von den Umgebungsdaten abhängt.

4. Verfahren nach einem der vorangehenden Ansprüche,
**dadurch gekennzeichnet,**
**dass** eine Anzeigeeinrichtung (1) verwendet wird, die separat von dem Kraftfahrzeug (19) ausgebildet und zur Befestigung an dem Kopf (18) und in dem Sichtfeld des Benutzers (17) ausgebildet ist.

5. Verfahren nach Anspruch 4,
**dadurch gekennzeichnet,**
**dass** die Anzeigeeinrichtung (1) eine Positionserfassungseinrichtung (25) aufweist, durch die eine relative Position und/oder Orientierung der Anzeigeeinrichtung (1) zu einer kraftfahrzeugfesten Bezugsposition und/oder Bezugsrichtung oder eine Bezugsinformation, aus der die relative Position und/oder Orientierung ermittelt werden, erfasst werden.

6. Verfahren nach einem der vorangehenden Ansprüche,
**dadurch gekennzeichnet,**
**dass** eine videobasierte Anzeigeeinrichtung (1, 2) verwendet wird, wobei zur Sichtbarmachung des Umgebungsbereichs ein Bild des Umgebungsbereichs durch die Sensorik (4) oder eine weitere Sensorik (24) erfasst und dargestellt wird, oder dass eine teildurchsichtige Anzeigeeinrichtung (1, 2) verwendet wird, durch die der Umgebungsbereich für den Benutzer durch die Ausgabeeinrichtung (1, 2) hindurch zumindest teilweise sichtbar ist, oder dass als Anzeigeeinrichtung (1, 2) eine virtuelle Netzhautanzeige verwendet wird, durch die die Informationsdarstellung auf die Netzhaut projiziert wird.

7. Verfahren nach einem der vorangehenden Ansprüche,
**dadurch gekennzeichnet,**
**dass** durch Auswertung der Umgebungsdaten das Objekt (8, 9) oder wenigstens eine Position (7) erkannt wird, wobei die auszugebende Information in Abhängigkeit einer Eigenschaft des erkannten Objekts (8, 9) oder in Abhängigkeit der Position (7) bereitgestellt wird.

8. Verfahren nach einem der vorangehenden Ansprüche,
**dadurch gekennzeichnet,**
**dass** durch Auswertung der Umgebungsdaten das oder ein Objekt (8, 9) erkannt wird, wobei in Abhängigkeit einer Position und/oder einer Orientierung des Objekts (8, 9) die Art der Informationsdarstellung (14, 15, 16) und/oder die Position, an, und/oder die Orientierung, in der die Informationsdarstellung (14, 15, 16) sichtbar gemacht wird, bestimmt werden.

9. Verfahren nach einem der vorangehenden Ansprüche,
**dadurch gekennzeichnet,**
**dass** aus den Umgebungsdaten ein den Umgebungsbereich beschreibendes, dreidimensionales Umgebungsmodell ermittelt wird, wobei in Abhängigkeit der Information und des Umgebungsmodells ein dreidimensionales oder flächiges Informationsobjekt generiert und in einem bezüglich des Umgebungsmodells vorgegebenen Koordinatensystem positioniert und/oder orientiert wird, wonach die Informationsdarstellung (14, 15, 16) durch eine Projektion des Informationsobjekts generiert wird.

10. Verfahren nach Anspruch 9,
**dadurch gekennzeichnet,**
**dass** in dem Umgebungsmodell eine Fläche des oder eines Objekts (8, 9) ausgewählt wird, wobei das flächige Informationsobjekt auf dieser Fläche angeordnet wird.

11. Verfahren nach einem der vorangehenden Ansprüche,
**dadurch gekennzeichnet,**
**dass** die Umgebungsdaten oder das Umgebungsmodell an eine kraftfahrzeugexterne Einrichtung (26) bereitgestellt werden, die die Art der Informationsdarstellung (14, 15, 16) und/oder die Position, an und/oder die Orientierung, in der die Informationsdarstellung (14, 15, 16) sichtbar gemacht wird, vorgibt.

12. Kraftfahrzeug, umfassend eine Sensorik (4) zur Erfassung eines Umgebungsbereichs,
**dadurch gekennzeichnet,**
**dass** es zur Durchführung des Verfahrens nach einem der vorangehenden Ansprüche eingerichtet ist.

## Claims

1. A method for operating a display device (1, 2) in a motor vehicle (19), comprising the steps:
- capturing environmental data, which relates to at least one environmental area of the environment of the motor vehicle (19) situated in a field of view of a user (17), by sensor technology (4) of the motor vehicle (19),
- providing at least one information to be output to the user (17) by an information source (10, 11, 13),
- visualizing an at least partially overlaid representation (27) of an information representation (14, 15, 16) rendering the information and of the environmental area for the user (17) by the display device (1, 2), wherein the type of the information representation depends on the environmental data, wherein the information is first three-dimensionally represented and a two-dimensional information representation (14, 15, 16) is only calculated by two-dimensional imaging by a virtual camera,
**characterized in that**
a shape, namely a curvature, of a surface, on which the information is represented, depends on the environmental data as the type of the information representation, wherein the two-dimensional information representation is adapted to the shape of the surface.

2. The method according to claim 1,
**characterized in that**
the shape of a three-dimensional object, which represents the information, additionally depends on the environmental data as the type of the information representation.

3. The method according to claim 1 or 2,
**characterized in that**
the position and/or the orientation, in which the information representation (14, 15, 16) is visualized, additionally depends on the environmental data.

4. The method according to any one of the preceding claims,
**characterized in that**
a display device (1) is used, which is formed separately from the motor vehicle (19) and is formed for attachment to the head (18) and in the field of view of the user (17).

5. The method according to claim 4,
**characterized in that**
the display device (1) comprises a position capturing device (25), by which a relative position and/or orientation of the display device (1) to a reference position and/or reference direction fixed relative to motor vehicle or reference information, from which the relative position and/or orientation are ascertained, are captured.

6. The method according to any one of the preceding claims,
**characterized in that**
a video-based display device (1, 2) is used, wherein an image of the environmental area is captured by the sensor technology (4) or a further sensor technology (24) and represented for visualizing the environmental area, or that a partially transparent display device (1, 2) is used, by which the environmental area is at least partially visible for the user through the output device (1, 2), or that a virtual retina display is used as the display device (1, 2), by which the information representation is projected onto the retina.

7. The method according to any one of the preceding claims,
**characterized in that**
the object (8, 9) or at least a position (7) is recognized by evaluation of the environmental data, wherein the information to be output is provided depending on a characteristic of the recognized object (8, 9) or depending on the position (7).

8. The method according to any one of the preceding claims,
**characterized in that**
the or an object (8, 9) is recognized by evaluation of the environmental data, wherein the type of the information representation (14, 15, 16) and/or the position and/or the orientation, in which the information representation (14, 15, 16) is visualized, are determined depending on a position and/or an orientation of the object (8, 9).

9. The method according to any one of the preceding claims,
**characterized in that**
a three-dimensional environmental model describing the environmental area is ascertained from the environmental data, wherein a three-dimensional or planar information object is generated and positioned and/or oriented in a coordinate system preset with respect to the environmental model depending on the information and the environmental model, whereafter the information representation (14, 15, 16) is generated by a projection of the information object.

10. The method according to claim 9,
**characterized in that**
a surface of the or of an object (8, 9) is selected in the environmental model, wherein the planar information object is arranged on this surface.

11. The method according to any one of the preceding claims,
**characterized in that**
the environmental data or the environmental model is provided to a device (26) external to motor vehicle, which presets the type of the information representation (14, 15, 16) and/or the position and/or the orientation, in which the information representation (14, 15, 16) is visualized.

12. A motor vehicle comprising sensor technology (4) for capturing an environmental area,
**characterized in that**
it is configured for performing the method according to any one of the preceding claims.

## Revendications

1. Procédé pour faire fonctionner un dispositif d'affichage (1, 2) dans un véhicule à moteur (19), comportant les étapes consistant à :
- capturer des données sur l'environnement concernant au moins une zone environnante de l'environnement du véhicule à moteur (19) située dans un champ de vision d'un utilisateur (17), au moyen d'un système de capteur (4) du véhicule à moteur (19),
- fournir au moins une information à délivrer à l'utilisateur (17), au moyen d'une source d'information (10, 11, 13),
- visualiser, au moyen du dispositif d'affichage (1, 2), une présentation (17) au moins partiellement superposée d'une présentation d'information (14, 15, 16) reproduisant l'information et de la zone environnante pour l'utilisateur, le type de la présentation d'information dépendant des données sur l'environnement, l'information étant d'abord représentée en trois dimensions et une présentation d'information bidimensionnelle (14, 15, 16) étant calculée par une représentation bidimensionnelle au moyen d'une caméra virtuelle,
**caractérisé en ce que**, en tant que type de présentation d'information, une forme, à savoir une courbure, d'une surface sur laquelle l'information est représentée, dépend des données sur l'environnement, la présentation d'information bidimensionnelle étant adaptée à la forme de la surface.

2. Procédé selon la revendication 1,
**caractérisé en ce qu'**
en plus du type de présentation de l'information, la forme d'un objet tridimensionnel représentant l'information dépend des données sur l'environnement.

3. Procédé selon la revendication 1 ou 2,
**caractérisé en ce que**
la position et/ou l'orientation dans laquelle la présentation d'information (14, 15, 16) est visualisée, dépend en outre des données sur l'environnement.

4. Procédé selon l'une des revendications précédentes,
**caractérisé en ce qu'**
un dispositif d'affichage (1) est utilisé, lequel dispositif d'affichage étant configuré séparément du véhicule à moteur (19) et configuré pour être fixé sur la tête (18) et dans le champ de vision de l'utilisateur (17).

5. Procédé selon la revendication 4,
**caractérisé en ce que**
le dispositif d'affichage (1) comporte un dispositif de capture de position (25) au moyen duquel sont capturées une position relative et/ou une orientation relative du dispositif d'affichage (1) par rapport à une position de référence et/ou une direction de référence fixe par rapport au véhicule, ou une information de référence à partir de laquelle la position relative et/ou l'orientation relative sont déterminées.

6. Procédé selon l'une des revendications précédentes,
**caractérisé en ce qu'**
un dispositif d'affichage vidéo (1, 2) est utilisé, une image de la zone environnante étant capturée et représentée par le système de capteur (4) ou un autre système de capteur (24) afin de pouvoir visualiser la zone environnante, ou **en ce qu'**un dispositif d'affichage semi-transparent (1, 2) à travers lequel la zone environnante est au moins partiellement visualisée par l'utilisateur à travers le dispositif d'affichage (1, 2), ou en ce qu'un affichage rétinien est utilisé en tant que dispositif d'affichage (1, 2) à travers lequel la présentation de l'information est projetée sur la rétine.

7. Procédé selon l'une des revendications précédentes,
**caractérisé en ce que**
l'objet (8, 9) ou au moins une position (7) est détecté en évaluant les données sur l'environnement, l'information à délivrer étant fournie en fonction d'une propriété de l'objet (8, 9) détecté ou en fonction de la position (7).

8. Procédé selon l'une des revendications précédentes,
**caractérisé en ce que**
l'objet ou un objet (8, 9) est détecté en évaluant les données sur l'environnement, le type de la présentation d'information (14, 15, 16) et/ou la position et/ou l'orientation étant déterminé en fonction d'une position et/ou d'une orientation de l'objet (8, 9) dans laquelle la présentation d'information (14, 15, 16) est visualisée.

9. Procédé selon l'une des revendications précédentes,
**caractérisé en ce qu'**
un modèle d'environnement tridimensionnel décrivant la zone environnante est déterminé à partir des données sur l'environnement, un objet d'information tridimensionnel ou plat étant généré en fonction de l'information et du modèle d'environnement, et est positionné et/ou orienté dans un système de coordonnées prédéfini par rapport au modèle d'environnement, après quoi la présentation d'information (14, 15, 16) est générée par une projection de l'objet d'information.

10. Procédé selon la revendication 9,
**caractérisé en ce qu'**
une surface de l'objet ou d'un objet (8, 9) est choisie dans le modèle d'environnement, l'objet d'information de surface étant disposé sur cette surface.

11. Procédé selon l'une des revendications précédentes,
**caractérisé en ce que**
les données sur l'environnement ou le modèle d'environnement sont fournis à un dispositif externe au véhicule (26) qui spécifie le type de présentation d'information (14, 15, 16) et/ou la position et/ou l'orientation dans laquelle la présentation d'information (14, 15, 16) est visualisée.

12. Véhicule à moteur comprenant un système de capteur (4) destiné à capturer une zone environnante,
**caractérisé en ce qu'**
il est configuré pour mettre en œuvre le procédé selon l'une des revendications précédentes.
